# EUROPEAN PATENT SPECIFICATION

(11) **EP 3 290 571 B1**
(45) Date of publication and mention of the grant of the patent: **01.01.2025**
(21) Application number: 17001251.2
(22) Date of filing: 21.07.2017
(51) Int. Cl.: D06F 39/08, A47L 15/42

(54) **SENSOR APPARATUS, AND ELECTRICAL APPLIANCE USED FOR WASHING AND EQUIPPED WITH SAID SENSOR APPARATUS**
SENSORVORRICHTUNG UND ELEKTRISCHES GERÄT ZUM WASCHEN UND MIT DIESER SENSORVORRICHTUNG
APPAREIL DE DÉTECTION ET APPAREIL ÉLECTRIQUE UTILISÉ POUR LE LAVAGE ET ÉQUIPÉ DUDIT APPAREIL DE DÉTECTION

(30) Priority: 08.08.2016 CN 201610642993
(43) Date of publication of application: 07.03.2018
(73) Proprietor: Diehl AKO Stiftung & Co. KG, 88239 Wangen (DE)
(72) Inventor: LI, Zhongke, Nanjing 211100 (CN); LI, Yan, Nanjing 211100 (CN)
(74) Representative: Diehl Patentabteilung

(56) References cited:
- DE-A1- 102007 016 215
- DE-A1- 19 821 148
- KR-B1- 101 471 942
- US-A- 5 444 531
- US-A1- 2003 142 316

## Description

### Technical field

The present invention relates to a sensor apparatus, and an electrical appliance used for washing and equipped with the sensor apparatus.

### Background art

In a conventional electrical appliance used for washing, processing parameters are detected by means of multiple independent sensors, e.g. water level sensors, water temperature sensors, water turbidity sensors, etc. Different sensors are used to measure different processing parameters of the electrical appliance, such as water level height, water temperature, water turbidity, etc.

These sensors are each installed at different positions on the electrical appliance, and connected to a control board of the electrical appliance by means of dedicated electrical cables and connectors. A processor is provided on the control board to read and process signals from the sensors, in order to ensure correct operation of the electrical appliance.

For example, patent document DE 102007016215 A1 has disclosed an optical turbidity sensor for a washing machine, which turbidity sensor is used to detect water turbidity.

Patent document WO 2014/124989 has disclosed a washing machine which has an improved water level sensor. The water level sensor is used to detect the water level height in a drum, is installed above the drum, and is provided with an air chamber and pipeline for connecting the sensor to the water.

US 5,444,531 discloses an encapsulated cluster of turbidity sensor, temperature sensor, conductivity sensor and magnetic sensor for a water-bearing machine.

In KR 101471942 B1 a sensor apparatus is disclosed, capable of being used to detect at least two processing parameters of an electrical appliance used for washing, wherein one of two sensor units is a water level sensor unit.

One or more of the following shortcomings are associated with a conventional electrical appliance used for washing which is constructed in the manner described above:
First of all, these sensors must be installed separately one after another, and will take up a considerable amount of installation space; moreover, installation of the sensors will consume much time and effort.
Secondly, each sensor needs two or more electrical cables and at least one connector in order to be connected to the control board, thereby requiring additional material costs as well as considerable installation space and installation costs.

Furthermore, signals between sensor and control board are generally analogue signals. Since the electrical cables used to connect the sensor to the control board are long, analogue signals might suffer interference from electromagnetic noise. Thus it is necessary for a solution for filtering interference signals to be provided on the control board; this increases the cost of the electrical appliance further. Moreover, in certain situations, the impedance of long electrical cables and the electromagnetic noise introduced thereby cannot be completely filtered, leading to a reduction in sensor precision.

### Content of the invention

The object of the present invention is to provide a sensor apparatus, and an electrical appliance used for washing and equipped with the sensor apparatus, which can overcome one or more of the shortcomings mentioned above.

To this end, the present invention provides a sensor apparatus, capable of being used to detect at least two processing parameters of an electrical appliance used for washing, the sensor apparatus comprising: at least two sensor units, used to detect different processing parameters and including a water level sensor unit; a signal processor unit, which is electrically connected to the at least two sensor units, acquires and processes signals from the at least two sensor units, and outputs digital signals; a housing, which accommodates the at least two sensor units and the signal processor unit, wherein the water level sensor unit comprises a water pressure detector and a deformation amount detector, the water pressure detector comprising a deformable device which deforms due to water pressure applied thereto, the deformation amount detector being able to detect a deformation amount of the deformable device, and send a deformation amount signal to the signal processor unit.

Preferably, besides the water level sensor unit, the other of the at least two sensor units comprise(s) one or more of the following sensor units: a water temperature sensor unit, a water hardness sensor unit, a water turbidity sensor unit, a drum position sensor unit, a load weight sensor unit and a load imbalance sensor unit.

Preferably, the deformable device is a deformable diaphragm. Preferably, the deformable diaphragm is made of metal foil or rubber or silicone rubber.

Preferably, the water level sensor unit comprises a water pressure detector, a spring and a spring deformation amount detector, wherein the water pressure detector transmits water pressure to the spring, the spring deforms due to water pressure, and the spring deformation amount detector can detect a deformation amount of the spring, and send a deformation amount signal to the signal processor unit. Preferably, the water pressure detector is a bellows structure with a bottom.

Preferably, besides the water level sensor unit, the other of the at least two sensor units comprise(s) a water hardness sensor unit, the water hardness sensor unit comprising at least two electrodes, the at least two electrodes being made of an electrically conductive material and pointing towards a region outside the housing, and being used to detect the electrical conductivity of water.

Preferably, besides the water level sensor unit, the other of the at least two sensor units comprise(s) a water temperature sensor unit, the water temperature sensor unit comprising a temperature detector and a protective casing, the protective casing being fixed to the housing and oriented towards a region outside the housing, with the temperature detector being disposed inside the protective casing. Preferably, the temperature detector is an NTC temperature detector. Preferably, the protective casing is made of a thermally conductive material.

Preferably, besides the water level sensor unit, the other of the at least two sensor units comprise(s) a load imbalance sensor unit, the load imbalance sensor unit detecting acceleration and motion of a loaded moving component of the electrical appliance, and sending a motion-related parameter value obtained to the signal processor unit. Preferably, the load imbalance sensor unit is a MEMS accelerometer.

Preferably, besides the water level sensor unit, the other of the at least two sensor units comprise(s) a water turbidity sensor unit, the water turbidity sensor unit comprising a light emitter, a light receiver and protective covers, wherein the light emitter and light receiver are each located in one protective cover, and the light emitter, light receiver and protective covers are arranged in such a way that light emitted by the light emitter sequentially passes through the protective cover accommodating the light emitter, water, and the protective cover accommodating the light receiver, and then arrives at the light receiver. Preferably, two or more light emitter/light receiver pairs are provided. Preferably, the protective covers are installed on the housing as independent components, or are made integrally with the housing.

Preferably, besides the water level sensor unit, the other of the at least two sensor units comprise(s) a water temperature sensor unit and a water hardness sensor unit, the water hardness sensor unit comprising at least two electrodes, wherein the at least two electrodes are fixed to the housing, are made of an electrically conductive material and point towards a region outside the housing, and are capable of detecting the electrical conductivity of water, and the water temperature sensor unit comprises a temperature detector disposed inside one of the at least two electrodes.

Preferably, the signal processor unit outputs digital signals to a control system of the electrical appliance in a wired or wireless manner by means of a connector. Preferably, the connector is connected to the control system of the electrical appliance via a bus electrical cable.

Preferably, the signal processor unit is able, on the basis of a signal from one of the at least two sensor units, to compensate a signal of one or more other of the at least two sensor units.

Preferably, the sensor apparatus comprises a printed circuit board, with the signal processor unit being disposed on the printed circuit board.

The present invention also provides an electrical appliance used for washing and equipped with the sensor apparatus described above.

Preferably, the electrical appliance is a washing machine. Preferably, the sensor apparatus is installed at the bottom, or at the bottom of one side, of an outer drum of the washing machine. Preferably, the sensor apparatus is installed on a connecting apparatus, connecting the outer drum to a water drainage apparatus, of the washing machine, in a position close to the bottom of the outer drum of the washing machine.

Preferably, the electrical appliance is a dishwasher. Preferably, the sensor apparatus is installed at the bottom, or at the bottom of one side, of an inner chamber of the dishwasher. Preferably, the sensor apparatus is installed on a connecting apparatus, connecting the inner chamber to a water drainage apparatus, of the dishwasher.

### Description of the accompanying drawings

Other features of the present invention will be made obvious by the following explanation of demonstrative embodiments which makes reference to the accompanying drawings.
Fig. 1 is a structural schematic diagram of a first embodiment of a sensor apparatus according to the present invention.
Fig. 2 is a structural schematic diagram of a second embodiment of a sensor apparatus according to the present invention.
Fig. 3 is a structural schematic diagram of a third embodiment of a sensor apparatus according to the present invention.
Fig. 4 is a structural schematic diagram of a fourth embodiment of a sensor apparatus according to the present invention.
Fig. 5 is a structural schematic diagram of a fifth embodiment of a sensor apparatus according to the present invention.
Fig. 6 is a structural schematic diagram of a sixth embodiment of a sensor apparatus according to the present invention.
Fig. 7 is a structural schematic diagram of a first embodiment of a washing machine according to the present invention.
Fig. 8 is a structural schematic diagram of a second embodiment of a washing machine according to the present invention.
Fig. 9 is a block diagram of signal compensation relationships among various sensors in a sensor apparatus according to the present invention.

### Particular embodiments

Various embodiments of the present invention are described below with reference to the accompanying drawings. These embodiments are intended to illustrate the present invention, which is not limited to these embodiments.

A washing machine is taken as an example hereinbelow to describe an electrical appliance used for washing. It should be understood that the present invention is not limited to a washing machine, but may be applied in other types of electrical appliance used for washing, such as a dishwasher, etc.

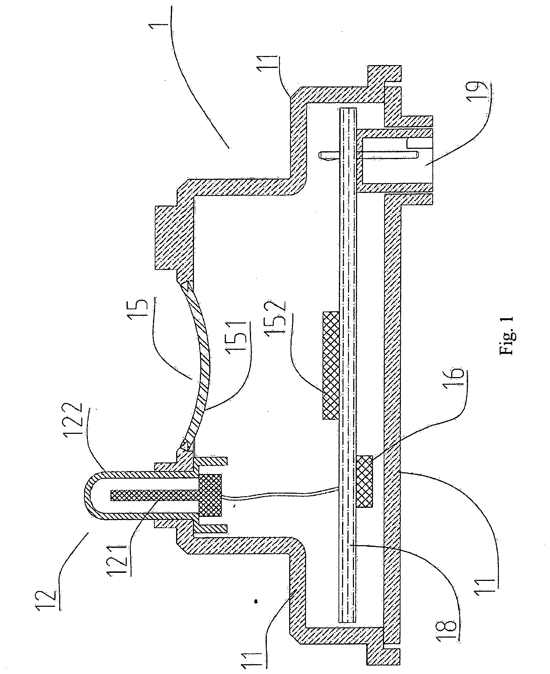

Fig. 1 is a structural schematic diagram of a first embodiment of a sensor apparatus according to the present invention.

In a first embodiment of a sensor apparatus, the sensor apparatus 1 comprises a housing 11, a water temperature sensor unit 12, a water level sensor unit 15, a signal processor unit 16, a printed circuit board 18 and a connector 19. The printed circuit board 18 is supported by the housing 11, and the signal processor unit 16 is disposed on the printed circuit board 18.

The water temperature sensor unit 12 comprises a temperature detector 121 and a protective casing 122. The protective casing 122 is fixed to the housing 11, and may be made of a metal material. In the case where the sensor apparatus is installed on a washing machine, the protective casing 122 is oriented so as to face towards the inside of a washing machine drum, and comes into direct contact with water during operation of the washing machine. The temperature detector 121 is disposed inside the protective casing 122, and is electrically connected to the signal processor unit 16, so as to transmit detected water temperature signals to the signal processor unit 16. The temperature detector 121 may be an NTC temperature detector.

The water level sensor unit 15 comprises a water pressure detector 151 and a deformation amount detector 152. The water pressure detector 151 comprises an elastically deformable device, such as a silicone rubber diaphragm or a metal deformation piece. The elastically deformable device is disposed on the housing 11, and in the case where the sensor apparatus is installed on a washing machine, the deformable device can come into direct contact with water, so as to deform due to water pressure. When the water level height in the washing machine drum changes, the water pressure will change, thereby causing a change in the amount of deformation of the water pressure detector 151. The deformation amount detector 152 may be disposed directly on the printed circuit board 18, and can detect the amount of deformation of the water pressure detector 151, and transmit a deformation amount signal of the water pressure detector 151 to the signal processor unit 16. Based on the amount of deformation of the water pressure detector 151, the signal processor unit 16 can obtain a corresponding water level.

The connector 19 is disposed on the housing 11, and has one end connected to the printed circuit board 18, and another end connected to a control system of the washing machine via an electrical cable, preferably a bus electrical cable, so as to transmit processed digital signals. Optionally, the other end of the connector 19 is provided with a wireless transmission apparatus, to wirelessly transmit digital signals to the control system of the washing machine.

In a first embodiment of the sensor apparatus, the water level sensor unit 15 and water temperature sensor unit 12 are disposed on one side of the housing, while the connector 19 is disposed on the other side of the housing which is opposite the water level sensor unit 15. Optionally, the housing comprises a first housing component and a second housing component, which first housing component and second housing component can be fitted together to form a closed unit. The first housing component is constructed to have at least two step faces, wherein the water level sensor unit 15 and water temperature sensor unit 12 are installed on the first step face, and the second step face can serve as a mounting face for fixing the sensor apparatus to the water machine. The second housing component may be constructed as a cover of the housing.

The signal processor unit 16 receives water temperature signals and water level signals from the water temperature sensor unit 12 and water level sensor unit 15, subjects the received signals to processing and then conversion to digital signals, and transmits the digital signals to the control system of the washing machine via the connector 19.

Different water pressures will be produced by the same water level height if the water temperature changes by a certain amount. Thus, preferably, after obtaining water temperature data from the water temperature sensor unit 12, the signal processor unit 16 can subject signals from the water level sensor unit 15 to compensation and correction according to a predetermined algorithm, so as to obtain more precise water level data.

During operation of the washing machine, the water temperature sensor unit 12 and water level sensor unit 15 detect the water temperature and water level height respectively, and send the detected data to the signal processor unit 16. The signal processor unit 16 processes the inputted signals, and transmits the processed digital signals to the control system of the washing machine via the connector 19. The control system of the washing machine then performs the next operational step according to received parameter values.

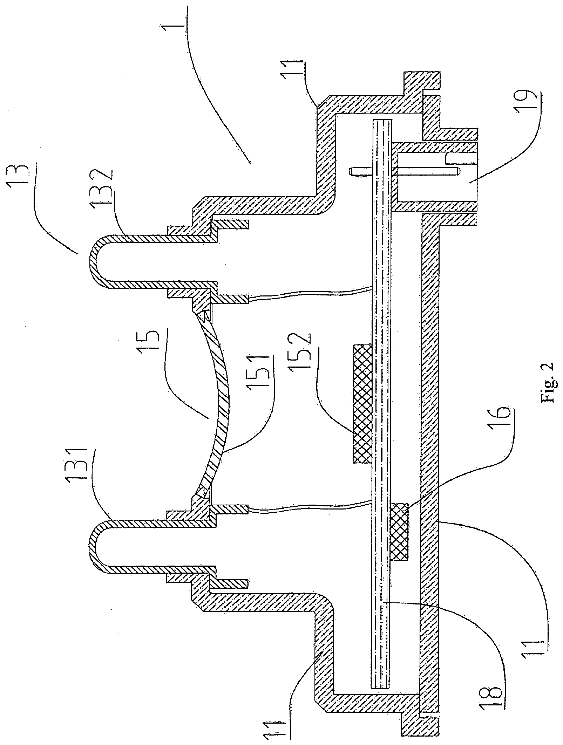

Fig. 2 is a structural schematic diagram of a second embodiment of a sensor apparatus according to the present invention. In the explanation of the second embodiment, drawing labels identical to those in the first embodiment are given to elements which have corresponding functions, and a detailed explanation thereof is omitted for the sake of simplicity.

In the second embodiment of the sensor apparatus, the sensor apparatus 1 comprises a housing 11, a water level sensor unit 15, a water hardness sensor unit 13, a signal processor unit 16, a printed circuit board 18 and a connector 19. The printed circuit board 18 is supported by the housing 11, and the signal processor unit 16 is disposed on the printed circuit board 18.

The water hardness sensor unit 13 comprises a first electrode 131 and a second electrode 132. The first electrode 131 and second electrode 132 are made of an electrically conductive metal material, and fixed to the housing 11. In the case where the sensor apparatus is installed on a washing machine, the first electrode 131 and second electrode 132 are oriented so as to face towards the inside of the washing machine drum, come into direct contact with water during operation of the washing machine, are electrically connected to the signal processor unit 16, and are used for detecting the electrical conductivity of the water, so as to obtain a water hardness value.

In the second embodiment of the sensor apparatus, a water pressure detector 151 is disposed in the middle of a first step face of the housing, and the first electrode and second electrode are disposed on two sides of the water pressure detector 151 respectively, thereby forming a symmetric and compact sensor apparatus structure.

Optionally, in the water hardness sensor unit, the number of electrodes is not limited to two; more than two electrodes may be provided.

During operation of the washing machine, the water hardness sensor unit 13 and water level sensor unit 15 detect the water hardness and water level height respectively, and send the detected data to the signal processor unit 16. The signal processor unit 16 processes the inputted signals, and transmits the processed digital signals to the control system of the washing machine via the connector 19. The control system of the washing machine then performs the next operational step according to received parameter values.

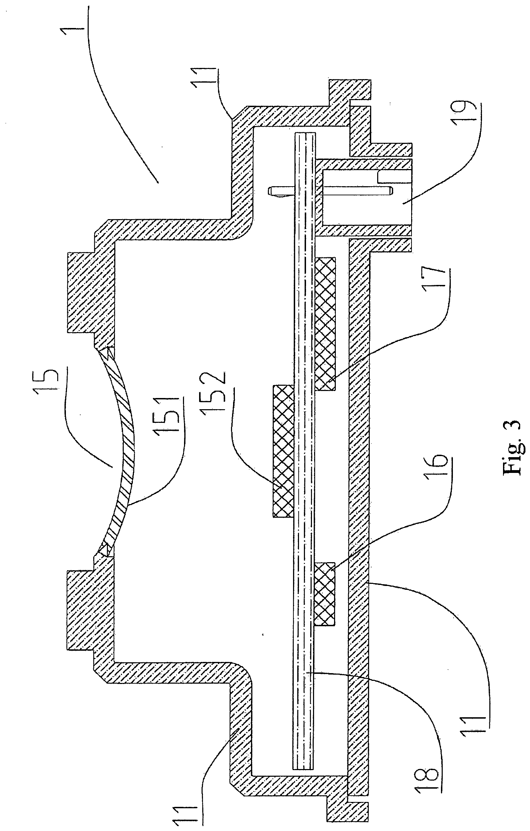

Fig. 3 is a structural schematic diagram of a third embodiment of a sensor apparatus according to the present invention. In the explanation of the third embodiment, drawing labels identical to those in the preceding embodiments are given to elements which have corresponding functions, and a detailed explanation thereof is omitted for the sake of simplicity.

In the third embodiment of the sensor apparatus, the sensor apparatus 1 comprises a housing 11, a water level sensor unit 15, a load imbalance sensor unit 17, a signal processor unit 16, a printed circuit board 18 and a connector 19. The printed circuit board 18 is supported by the housing 11, and the signal processor unit 16 is disposed on the printed circuit board 18.

The load imbalance sensor unit 17 is disposed on the printed circuit board 18 and electrically connected to the signal processor unit 16. The load imbalance sensor unit 17 is used for detecting acceleration and motion of a washing machine outer drum during operation of the washing machine, and sends an obtained parameter value (such as speed, acceleration etc.) associated with motion to the signal processor unit 16, so as to obtain a load imbalance state. Preferably, the load imbalance sensor unit 17 is a MEMS accelerometer.

Since the motion state of the washing machine outer drum will be affected to a certain extent by the water level height in the drum, preferably, after obtaining water level data from the water level sensor unit 15, the signal processor unit 16 can subject signals from the load imbalance sensor unit 17 to compensation and correction according to a predetermined algorithm, so as to obtain more precise load imbalance state data.

During operation of the washing machine, the load imbalance sensor unit 17 and water level sensor unit 15 detect a washing machine outer drum motion parameter and water level height respectively, and send the detected data to the signal processor unit 16. The signal processor unit 16 processes the inputted signals, and transmits the processed digital signals to the control system of the washing machine via the connector 19. The control system of the washing machine then performs the next operational step according to received parameter values.

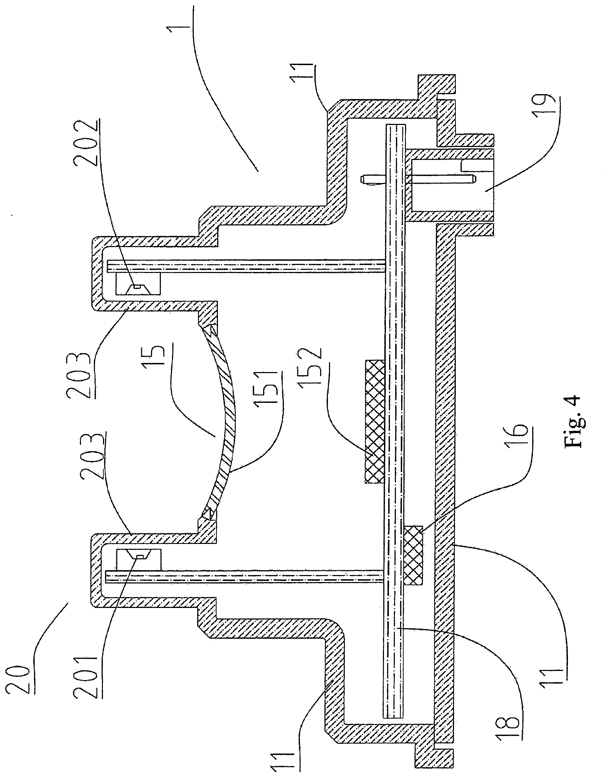

Fig. 4 is a structural schematic diagram of a fourth embodiment of a sensor apparatus according to the present invention. In the explanation of the fourth embodiment, drawing labels identical to those in the preceding embodiments are given to elements which have corresponding functions, and a detailed explanation thereof is omitted for the sake of simplicity.

In the fourth embodiment of the sensor apparatus, the sensor apparatus 1 comprises a housing 11, a water level sensor unit 15, a water turbidity sensor unit 20, a signal processor unit 16, a printed circuit board 18 and a connector 19. The printed circuit board 18 is supported by the housing 11, and the signal processor unit 16 is disposed on the printed circuit board 18.

The water turbidity sensor unit 20 comprises a light emitter 201, a light receiver 202 and protective covers 203. The protective covers 203 are disposed on the housing 11. The light emitter 201 and light receiver 202 are each located in one protective cover 203, and electrically connected to the signal processor unit 16, and the light emitter 201 and light receiver 202 are arranged to face each other. The light emitter 201, light receiver 202 and protective covers 203 are arranged in such a way that a light path of light emitted by the light emitter 201 sequentially passes through the protective cover 203 outside the light emitter 201, the water in the washing machine drum, and the protective cover 203 outside the light receiver 202, and then arrives at the light receiver 202. The light emitter 201 emits a certain amount of light, which passes through the protective cover 203 and then propagates through the water in the washing machine drum. When the water is relatively clear, there are fewer contaminants in the water, so the extent to which light is blocked or scattered is less; more light is able to pass through the water and arrive at the light receiver 202, so a greater quantity of light is received by the light receiver 202. Conversely, when the water is relatively turbid, there are more contaminants in the water, so the extent to which light is blocked or scattered is greater; less light is able to pass through the water and arrive at the light receiver 202, so a smaller quantity of light is received by the light receiver 202. The light receiver 202 sends the quantity of light received to the signal processor 16, so as to determine the water turbidity according to the size of the quantity of light.

In the fourth embodiment of the sensor apparatus, a water pressure detector 151 is disposed in the middle of a first step face of the housing, and the light emitter 201 and light receiver 202 are disposed on two sides of the water pressure detector 151 respectively, thereby forming a symmetric and compact sensor apparatus structure.

Optionally, in the water turbidity sensor unit, there is no restriction to one light emitter/light receiver pair; two or more light emitter/light receiver pairs may be provided according to measurement precision requirements.

Optionally, in the water turbidity sensor unit, the protective covers which accommodate the light emitter and light receiver may be transparent, translucent or opaque. For example, in the case where infrared light is used, the protective covers might be translucent or opaque to the human eye. Optionally, the protective covers may be installed on the housing as independent components, or made integrally with the housing.

During operation of the washing machine, the water turbidity sensor unit 20 and water level sensor unit 15 detect water turbidity and water level height respectively, and send the detected data to the signal processor unit 16. The signal processor unit 16 processes the inputted signals, and transmits the processed digital signals to the control system of the washing machine via the connector 19. The control system of the washing machine then performs the next operational step according to received parameter values.

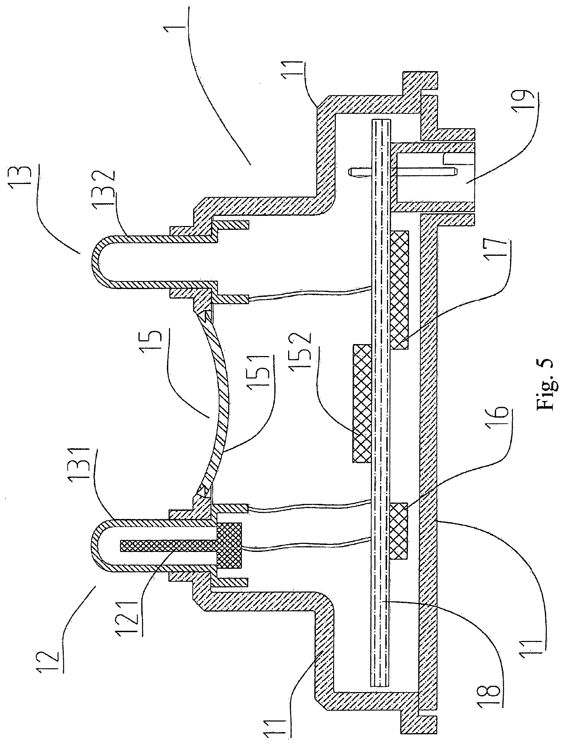

Fig. 5 is a structural schematic diagram of a fifth embodiment of a sensor apparatus according to the present invention. In the explanation of the fifth embodiment, drawing labels identical to those in the preceding embodiments are given to elements which have corresponding functions, and a detailed explanation thereof is omitted for the sake of simplicity.

In the fifth embodiment of the sensor apparatus, the sensor apparatus 1 comprises a housing 11, a water level sensor unit 15, a water temperature sensor unit 12, a water hardness sensor unit 13, a load imbalance sensor unit 17, a signal processor unit 16, a printed circuit board 18 and a connector 19. The printed circuit board 18 is supported by the housing 11, and the signal processor unit 16 is disposed on the printed circuit board 18.

In the fifth embodiment, unlike in the first embodiment, the water temperature sensor unit 12 is not provided with a protective casing for a temperature detector 121. Instead, a first electrode 131 of the water hardness sensor unit 13 performs the function of protecting the temperature detector 121. While detecting the electrical conductivity of the water, the first electrode 131 protects the temperature detector 121 from contact with water and transmits water heat to the temperature detector 121. Through such an arrangement, the number of components in the sensor apparatus is further reduced, thereby forming a compact sensor apparatus structure.

Preferably, after obtaining water temperature data from the water temperature sensor unit 12 and water level data from the water level sensor unit 15, the signal processor unit 16 can subject signals from the water hardness sensor unit 13 and load imbalance sensor unit 17 to compensation and correction according to a predetermined algorithm, so as to obtain more precise water hardness and load imbalance states.

During operation of the washing machine, the water level sensor unit 15, water temperature sensor unit 12, water hardness sensor unit 13 and load imbalance sensor unit 17 detect water level height, water temperature, water hardness, and washing machine outer drum motion parameters respectively, and send the detected data to the signal processor unit 16. The signal processor unit 16 processes the inputted signals, and transmits the processed digital signals to the control system of the washing machine via the connector 19. The control system of the washing machine then performs the next operational step according to received parameter values.

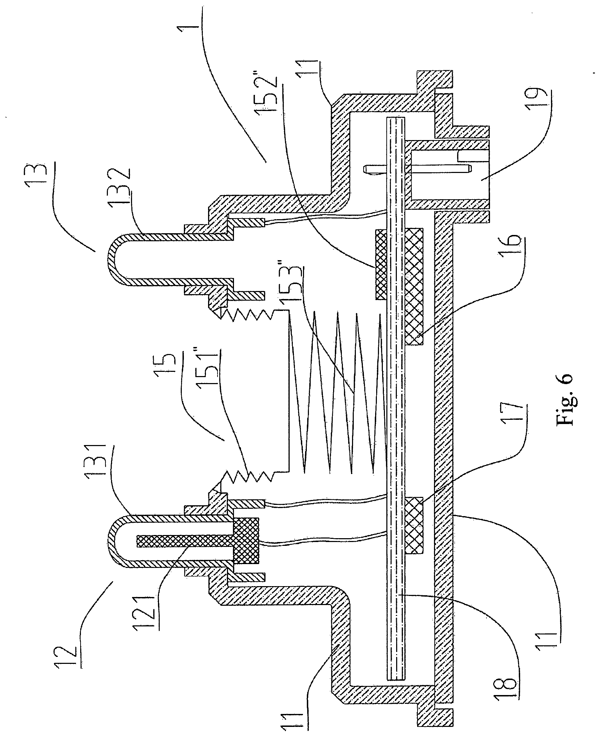

Fig. 6 is a structural schematic diagram of a sixth embodiment of a sensor apparatus according to the present invention. In the explanation of the sixth embodiment, drawing labels identical to those in the preceding embodiments are given to elements which have corresponding functions, and a detailed explanation thereof is omitted for the sake of simplicity.

In the sixth embodiment of the sensor apparatus, the sensor apparatus 1 comprises a housing 11, a water level sensor unit 15, a water temperature sensor unit 12, a water hardness sensor unit 13, a load imbalance sensor unit 17, a signal processor unit 16, a printed circuit board 18 and a connector 19. The printed circuit board 18 is supported by the housing 11, and the signal processor unit 16 is disposed on the printed circuit board 18.

The sixth embodiment of the sensor apparatus differs from the fifth embodiment in the construction of the water level sensor unit 15. In the sixth embodiment, the water level sensor unit 15 comprises a water pressure detector 151", a spring deformation amount detector 152" and a spring 153". The water pressure detector 151" is disposed on the housing 11, with two ends fixed to the housing 11, and can freely extend and retract and transmit water pressure to the spring 153". Preferably, the water pressure detector 151" is a bellows structure with a bottom. The water pressure detector 151" can seal the sensor, preventing water from seeping into the interior of the sensor. The spring 153" has one end fixed to the bottom of the water pressure detector 151", and another end fixed to the printed circuit board 18. The spring 153" can move in reciprocal motion between the water pressure detector 151" and the printed circuit board 18, extending or retracting with changes in water pressure. The spring deformation amount detector 152" is disposed on the printed circuit board 18 and electrically connected to the signal processor unit 16. The spring deformation amount detector 152" detects the amount of deformation of the spring 153, and transmits a deformation amount signal of the spring 153 to the signal processor unit 16. The signal processor unit 16 converts the deformation amount of the spring to a water level height, then outputs a processed digital signal to the control system of the washing machine via the connector 19.

Some embodiments of the sensor apparatus are described above. It should be understood that the present invention is not limited to the particular structures of these embodiments; a person skilled in the art could, after reading the description, make other amendments and modifications according to requirements. For example, a drum position detection sensor unit or load weight sensor unit etc. could also be provided in the sensor apparatus. These amendments and modifications all fall within the scope of the present invention.

Preferably, the signal processor unit 16 can not only compensate and correct other parameters according to water temperature and water level data, but can also compensate and correct other parameters according to drum position and load weight data, etc.

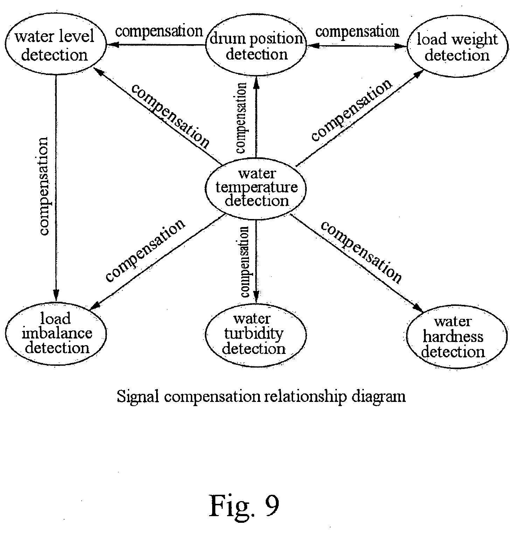

Fig. 9 shows schematically an example of a diagram showing signal compensation relationships among various processing parameters. It can be seen from Fig. 9 that the signal processor unit can compensate various parameters of water level, drum position, load weight, load imbalance state, water turbidity and water hardness according to water temperature data, compensate a load imbalance state parameter according to water level data, compensate water level and load weight according to drum position data, and compensate drum position according to load weight data. However, the present invention is not limited to the example of the signal compensation relationships in Fig. 9. When the sensor apparatus of the present invention comprises a greater or smaller number of sensor units, similar compensation relationships exist among the various parameters. More precise measurements can thereby be achieved.

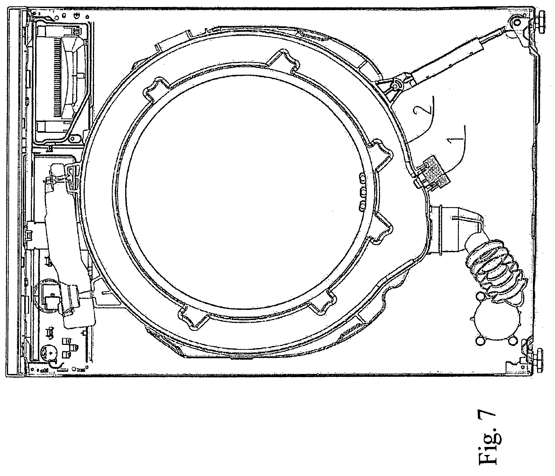

The structure of a washing machine equipped with a sensor apparatus according to the present invention is described below with reference to Figs. 7 - 8.

Fig. 7 is a structural schematic diagram of a first embodiment of a washing machine according to the present invention. The washing machine of the present invention has the same components as a conventional washing machine (such as water intake system, water drainage system, etc.). These identical components are not described further here; only those features of the washing machine of the present invention which differ from a conventional washing machine are described.

As Fig. 7 shows, a sensor apparatus 1 of the present invention is installed at an opening in the bottom of a washing machine outer drum 2, and is fixed by, for example, a screw-thread connection or an adhesive connection, etc. During operation of the washing machine, the sensor apparatus 1 comes into direct contact with water in the washing machine outer drum, such that the various sensor units detect relevant parameters, and send signals to the signal processor unit, followed by transmission to the control system of the washing machine, to ensure normal operation of the washing machine.

The sensor apparatus 1 is installed at the bottom of the washing machine outer drum; this is very beneficial for measurement of water level height. The present invention combines various sensor elements in the housing 11 in an integrated manner to form the sensor apparatus 1, thereby simplifying the installation steps and internal structure of the washing machine, shortening the installation time, and reducing the use of electrical cables and connectors, thereby reducing installation costs. In addition, since the use of excessively long electrical cables is avoided, and digital signal output is employed, various processing parameters of the washing machine can be detected more precisely.

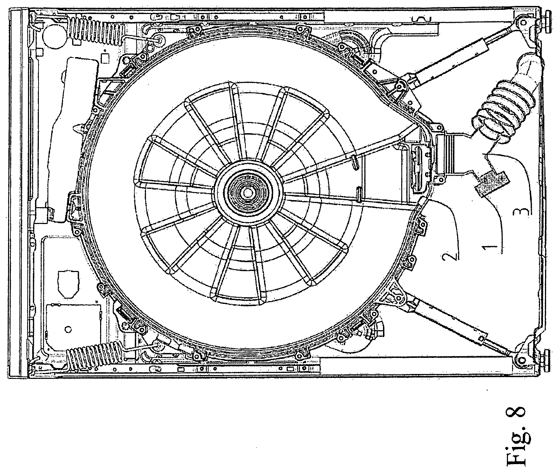

Fig. 8 is a structural schematic diagram of a second embodiment of a washing machine according to the present invention.

In this embodiment, the sensor apparatus 1 is not installed at an opening in the bottom of a washing machine outer drum 2, but is installed on a connecting hose 3 (which connects the outer drum to a water drainage apparatus) of the washing machine outer drum, in a position close to the bottom of the washing machine outer drum. The sensor apparatus 1 comes into contact with water in the connecting hose 3, in order to detect relevant signals. Such an arrangement can not only achieve the same technical effects and advantages as the washing machine in Fig. 7, but since there is no need to additionally provide an opening for the sensor apparatus 1 in the outer drum 2 of the washing machine, a forming mould for the outer drum 2 is kept unchanged, and application in an existing washing machine is easy; compared with the washing machine in Fig. 7, manufacturing costs are vastly reduced.

Two embodiments of the washing machine are described above. It should be understood that the present invention is not limited to the particular structures in these embodiments; a person skilled in the art could, after reading the description, make other amendments and modifications according to requirements. For example, the orientation of the sensor apparatus may be vertical, or inclined relative to a vertical direction. For example, the electrical appliance used for washing may be a dishwasher, with the sensor apparatus installed at the bottom, or at the bottom of one side, of an inner chamber of the dishwasher, or installed on a connecting apparatus (which connects the inner chamber to a water drainage apparatus) of the dishwasher.

Although the present invention has been described with reference to demonstrative embodiments, it must be understood that the present invention is not limited to the demonstrative embodiments which are disclosed. The scope of the following claims should be afforded the broadest interpretation, and includes all equivalent structures and functions.

## Claims

1. Sensor apparatus, capable of being used to detect at least two processing parameters of an electrical appliance used for washing, the sensor apparatus (1) comprising:
at least two sensor units, used to detect different processing parameters;
a signal processor unit (16), which is electrically connected to the at least two sensor units, acquires and processes signals from the at least two sensor units, and outputs digital signals;
a housing (11), which accommodates the at least two sensor units and the signal processor unit (16), wherein
the at least two sensor units include a water level sensor unit (15),
**characterized in that** the water level sensor unit (15) comprises a water pressure detector (151, 151') and a deformation amount detector (152), the water pressure detector (151, 151') comprising a deformable device which deforms due to water pressure applied thereto, the deformation amount detector (152) being able to detect a deformation amount of the deformable device, and send a deformation amount signal to the signal processor unit (16).

2. Sensor apparatus according to Claim 1, **characterized in that** besides the water level sensor unit (15), the other of the at least two sensor units comprise(s) one or more of the following sensor units: a water temperature sensor unit (12), a water hardness sensor unit (13), a water turbidity sensor unit (20), a drum position sensor unit, a load weight sensor unit and a load imbalance sensor unit (17).

3. Sensor apparatus according to Claim 1 or 2, **characterized in that** the deformable device is a deformable diaphragm.

4. Sensor apparatus according to one of the previous claims, **characterized in that** the water level sensor unit (15) comprises a water pressure detector (151, 151'), a spring (153") and a spring deformation amount detector (152"), wherein the water pressure detector (151, 151') transmits water pressure to the spring (153"), the spring (153") deforms due to water pressure, and the spring deformation amount detector (152") can detect a deformation amount of the spring (153"), and send a deformation amount signal to the signal processor unit (16).

5. Sensor apparatus according to one of the previous claims, **characterized in that** besides the water level sensor unit (15), the other of the at least two sensor units comprise(s) a water hardness sensor unit (13), the water hardness sensor unit (13) comprising at least two electrodes (131, 132), the at least two electrodes (131, 132) being made of an electrically conductive material and pointing towards a region outside the housing (11), and being used to detect the electrical conductivity of water.

6. Sensor apparatus according to one of the previous claims, **characterized in that** besides the water level sensor unit (15), the other of the at least two sensor units comprise(s) a water temperature sensor unit (12), the water temperature sensor unit (12) comprising a temperature detector (121) and a protective casing (122), the protective casing (122) being fixed to the housing (11) and oriented towards a region outside the housing (11), with the temperature detector (121) being disposed inside the protective casing (122).

7. Sensor apparatus according to one of the previous claims, **characterized in that** besides the water level sensor unit (15), the other of the at least two sensor units comprise(s) a load imbalance sensor unit (17), the load imbalance sensor unit (17) detecting acceleration and motion of a loaded moving component of the electrical appliance, and sending a motion-related parameter value obtained to the signal processor unit (16).

8. Sensor apparatus according to one of the previous claims, **characterized in that** besides the water level sensor unit (15), the other of the at least two sensor units comprise(s) a water turbidity sensor unit (20), the water turbidity sensor unit (20) comprising a light emitter, a light receiver (202) and protective covers (203), wherein the light emitter (201) and light receiver (202) are each located in one protective cover (203), and the light emitter (201), light receiver (202) and protective covers (203) are arranged in such a way that light emitted by the light emitter (201) sequentially passes through the protective cover (203) accommodating the light emitter (201), water, and the protective cover (203) accommodating the light receiver (202), and then arrives at the light receiver (202).

9. Sensor apparatus according to one of the previous claims, **characterized in that** besides the water level sensor unit (15), the other of the at least two sensor units comprise(s) a water temperature sensor unit (12) and a water hardness sensor unit (13), the water hardness sensor unit (13) comprising at least two electrodes (131, 132), wherein the at least two electrodes (131, 132) are fixed to the housing (11), are made of an electrically conductive material and point towards a region outside the housing (11), and are capable of detecting the electrical conductivity of water, and the water temperature sensor unit (12) comprises a temperature detector (121) disposed inside one of the at least two electrodes (131, 132).

10. Sensor apparatus according to one of the previous claims, **characterized in that** the signal processor unit (16) outputs digital signals to a control system of the electrical appliance in a wired or wireless manner by means of a connector (19).

11. Sensor apparatus according to one of the previous claims, **characterized in that** the signal processor unit (16) is able, on the basis of a signal from one of the at least two sensor units, to compensate a signal of one or more other of the at least two sensor units.

12. Electrical appliance used for washing, in particular a washing machine or a dishwasher, comprising the sensor apparatus (1) according to any one of Claims 1-11.

13. Electrical appliance according to Claim 12, **characterized in that** the sensor apparatus (1) is installed at the bottom, or at the bottom of one side, of an outer drum (2) of the washing machine or that the sensor apparatus (1) is installed at the bottom, or at the bottom of one side, of an inner chamber of the dishwasher.

14. Electrical appliance according to Claim 12 or 13, **characterized in that** the sensor apparatus (1) is installed on a connecting apparatus, connecting the outer drum (2) to a water drainage apparatus, of the washing machine, in a position close to the bottom of the outer drum (2) of the washing machine or that the sensor apparatus (1) is installed on a connecting apparatus, connecting the inner chamber to a water drainage apparatus, of the dishwasher.

## Patentansprüche

1. Sensorvorrichtung, die verwendet werden kann, um mindestens zwei Verarbeitungsparameter eines elektrischen Haushaltsgeräts, das zum Waschen verwendet wird, zu detektieren, wobei die Sensorvorrichtung (1) Folgendes umfasst:
mindestens zwei Sensoreinheiten, die verwendet werden, um verschiedene Verarbeitungsparameter zu detektieren;
eine Signalprozessoreinheit (16), die mit den mindestens zwei Sensoreinheiten elektrisch verbunden ist, Signale von den mindestens zwei Sensoreinheit erfasst und verarbeitet und digitale Signale ausgibt;
ein Gehäuse (11), das die mindestens zwei Sensoreinheiten und die Signalprozessoreinheit (16) aufnimmt, wobei
die mindestens zwei Sensoreinheiten eine Wasserpegelsensoreinheit (15) enthalten,
**dadurch gekennzeichnet, dass** die Wasserpegelsensoreinheit (15) einen Wasserdruckdetektor (151, 151') und einen Verformungsbetragsdetektor (152) umfasst, wobei der Wasserdruckdetektor (151, 151') eine verformbare Vorrichtung umfasst, die sich aufgrund von auf ihn einwirkendem Wasserdruck verformt, wobei der Verformungsbetragsdetektor (152) einen Verformungsbetrag der verformbaren Vorrichtung detektieren und ein Verformungsbetragssignal an die Signalprozessoreinheit (16) senden kann.

2. Sensorvorrichtung nach Anspruch 1, **dadurch gekennzeichnet, dass** neben der Wasserpegelsensoreinheit (15) die andere der mindestens zwei Sensoreinheiten eine oder mehrere der folgenden Sensoreinheiten umfasst: eine Wassertemperatursensoreinheit (12), eine Wasserhärtesensoreinheit (13), eine Wassertrübungssensoreinheit (20) eine Trommelpositionssensoreinheit, eine Ladungsgewichtssensoreinheit und eine Ladungsungleichgewichtssensoreinheit (17).

3. Sensorvorrichtung nach Anspruch 1 oder 2, **dadurch gekennzeichnet, dass** die verformbare Vorrichtung eine verformbare Membran ist.

4. Sensorvorrichtung nach einem der vorhergehenden Ansprüche, **dadurch gekennzeichnet, dass** die Wasserpegelsensoreinheit (15) einen Wasserdruckdetektor (151, 151'), eine Feder (153") und einen Federverformungsbetragssensor (152") umfasst, wobei der Wasserdruckdetektor (151, 151') Wasserdruck auf die Feder (153") überträgt, die Feder (153") sich aufgrund des Wasserdrucks verformt und der Federverformungsbetragsdetektor (152") einen Verformungsbetrag der Feder (153") detektieren und ein Verformungsbetragssignal an die Signalprozessoreinheit (16) senden kann.

5. Sensorvorrichtung nach einem der vorhergehenden Ansprüche, **dadurch gekennzeichnet, dass** neben der Wasserpegelsensoreinheit (15) die andere der mindestens zwei Sensoreinheiten eine Wasserhärtesensoreinheit (13) umfasst, wobei die Wasserhärtesensoreinheit (13) mindestens zwei Elektroden (131, 132) umfasst, wobei die mindestens zwei Elektroden (131, 132) aus einem elektrisch leitenden Material hergestellt sind und in Richtung eines Bereichs außerhalb des Gehäuses (11) zeigen und verwendet werden, um die elektrische Leitfähigkeit von Wasser zu detektieren.

6. Sensorvorrichtung nach einem der vorhergehenden Ansprüche, **dadurch gekennzeichnet, dass** neben der Wasserpegelsensoreinheit (15) die andere der mindestens zwei Sensoreinheiten eine Wassertemperatursensoreinheit (12) umfasst, wobei die Wassertemperatursensoreinheit (12) einen Temperaturdetektor (121) und ein Schutzgehäuse (122) umfasst, wobei das Schutzgehäuse (122) an dem Gehäuse (11) befestigt ist und auf eine Richtung eines Bereichs außerhalb des Gehäuses (11) ausgerichtet ist, wobei der Temperaturdetektor (121) innerhalb des Schutzgehäuses (122) angeordnet ist.

7. Sensorvorrichtung nach einem der vorhergehenden Ansprüche, **dadurch gekennzeichnet, dass** neben der Wasserpegelsensoreinheit (15) die andere der mindestens zwei Sensoreinheiten eine Ladungsungleichgewichtssensoreinheit (17) umfasst, wobei die Ladungsungleichgewichtssensoreinheit (17) eine Beschleunigung und eine Bewegung einer geladenen sich bewegenden Komponente des elektrischen Haushaltsgeräts detektiert und einen erhaltenen bewegungsbezogenen Parameterwert an die Signalprozessoreinheit (16) sendet.

8. Sensorvorrichtung nach einem der vorhergehenden Ansprüche, **dadurch gekennzeichnet, dass** neben der Wasserpegelsensoreinheit (15) die andere der mindestens zwei Sensoreinheiten eine Wassertrübungssensoreinheit (20) umfasst, wobei die Wassertrübungssensoreinheit (20) einen Lichtsender, einen Lichtempfänger (202) und Schutzabdeckungen (203) umfasst, wobei sich der Lichtsender (201) und der Lichtempfänger (202) jeweils in einer Schutzabdeckung (203) befinden und der Lichtsender (201), der Lichtempfänger (202) und die Schutzabdeckungen (203) derart angeordnet sind, dass Licht, das durch den Lichtsender (201) ausgesendet wird, nacheinander durch die Schutzabdeckung (203), die den Lichtsender (201) aufnimmt, Wasser und die Schutzabdeckung (203), die den Lichtempfänger (202) aufnimmt, verläuft und dann bei dem Lichtempfänger (202) ankommt.

9. Sensorvorrichtung nach einem der vorhergehenden Ansprüche, **dadurch gekennzeichnet, dass** neben der Wasserpegelsensoreinheit (15) die andere der mindestens zwei Sensoreinheiten eine Wassertemperatursensoreinheit (132) und eine Wasserhärtesensoreinheit (13) umfasst, wobei die Wasserhärtesensoreinheit (13) mindestens zwei Elektroden (131, 132) umfasst, wobei die mindestens zwei Elektroden (131, 132) an dem Gehäuse (11) befestigt sind, aus einem elektrisch leitenden Material hergestellt sind und in Richtung eines Bereichs außerhalb des Gehäuses (11) zeigen und die elektrische Leitfähigkeit von Wasser detektieren können, und die Wassertemperatursensoreinheit (12) einen Temperaturdetektor (121) umfasst, der innerhalb einer der mindestens zwei Elektroden (131, 132) angeordnet ist.

10. Sensorvorrichtung nach einem der vorhergehenden Ansprüche, **dadurch gekennzeichnet, dass** die Signalprozessoreinheit (16) digitale Signale, um ein Steuersystem des elektrischen Haushaltsgeräts zu steuern, in einer drahtgebundenen oder drahtlosen Weise mit Hilfe eines Verbindungselements (19) ausgibt.

11. Sensorvorrichtung nach einem der vorhergehenden Ansprüche, **dadurch gekennzeichnet, dass** die Signalprozessoreinheit (16) anhand eines Signals von einer der mindestens zwei Sensoreinheiten ein Signal einer oder mehrerer anderer der mindestens zwei Sensoreinheiten kompensieren kann.

12. Elektrisches Haushaltsgerät, das zum Waschen verwendet wird, insbesondere eine Waschmaschine oder eine Geschirrspülmaschine, die die Sensorvorrichtung (1) nach einem der Ansprüche 1-11 umfasst.

13. Elektrisches Haushaltsgerät nach Anspruch 12, **dadurch gekennzeichnet, dass** die Sensorvorrichtung (1) auf dem Boden oder am unteren Rand einer Seite einer äußeren Trommel (2) der Waschmaschine eingebaut ist und dass die Sensorvorrichtung (1) auf dem Boden oder am unteren Rand einer Seite einer inneren Kammer der Geschirrspülmaschine eingebaut ist.

14. Elektrisches Haushaltsgerät nach Anspruch 12 oder 13, **dadurch gekennzeichnet, dass** die Sensorvorrichtung (1) auf einer Verbindungsvorrichtung eingebaut ist, die die äußere Trommel (2) mit einer Wasserabflussvorrichtung der Waschmaschine in einer Position in der Nähe des Bodens der äußeren Trommel (2) der Waschmaschine verbindet, oder dass die Sensorvorrichtung (1) in einer Verbindungsvorrichtung eingebaut ist, die die innere Kammer mit einer Wasserabflussvorrichtung der Geschirrspülmaschine verbindet.

## Revendications

1. Appareil de détection, pouvant être utilisé pour détecter au moins deux paramètres de traitement d'un appareil électrique utilisé pour le lavage, l'appareil de détection (1) comprenant :
au moins deux unités de détection, utilisées pour détecter des paramètres de traitement différents ;
une unité de traitement des signaux (16), connectée électriquement aux au moins deux unités de détection, qui acquiert et traite les signaux provenant des au moins deux unités de détection et délivre en sortie des signaux numériques ;
un boîtier (11), qui accueille les au moins deux unités de détection et l'unité de traitement des signaux (16), où :
les au moins deux unités de détection comprennent une unité de détection de niveau d'eau (15),
**caractérisé par le fait que** l'unité de détection de niveau d'eau (15) comprend un détecteur de pression d'eau (151, 151') et un détecteur de quantité de déformation (152), le détecteur de pression d'eau (151, 151') comprenant un dispositif déformable qui se déforme en raison de la pression d'eau qui lui est appliquée, le détecteur de quantité de déformation (152) étant capable de détecter une quantité de déformation du dispositif déformable et d'envoyer un signal de quantité de déformation à l'unité de traitement des signaux (16).

2. Appareil de détection selon la revendication 1, **caractérisé par le fait qu'**en plus de l'unité de détection de niveau d'eau (15), l'autre des au moins deux unités de détection comprend une ou plusieurs des unités de détection suivantes : une unité de détection de la température de l'eau (12), une unité de détection de la dureté de l'eau (13), une unité de détection de la turbidité de l'eau (20), une unité de détection de la position du tambour, une unité de détection du poids de la charge et une unité de détection du déséquilibre de la charge (17).

3. Appareil de détection selon la revendication 1 ou la revendication 2, **caractérisé par le fait que** le dispositif déformable est un diaphragme déformable.

4. Appareil de détection selon l'une des revendications précédentes, **caractérisé par le fait que** l'unité de détection de niveau d'eau (15) comprend un détecteur de pression d'eau (151, 151'), un ressort (153") et un détecteur de quantité de déformation du ressort (152"), où le détecteur de pression d'eau (151, 151') transmet la pression d'eau au ressort (153"), le ressort (153") se déforme sous l'effet de la pression d'eau, et le détecteur de quantité de déformation du ressort (152") peut détecter une quantité de déformation du ressort (153"), et envoyer un signal de quantité de déformation à l'unité de traitement des signaux (16).

5. Appareil de détection selon l'une des revendications précédentes, **caractérisé par le fait qu'**en plus de l'unité de détection de niveau d'eau (15), l'autre des au moins deux unités de détection comprend une unité de détection de la dureté de l'eau (13), l'unité de détection de la dureté de l'eau (13) comprenant au moins deux électrodes (131, 132), les au moins deux électrodes (131, 132) étant constituées d'un matériau conducteur d'électricité et orientées vers une zone située à l'extérieur du boîtier (11), et étant utilisées pour détecter la conductivité électrique de l'eau.

6. Appareil de détection selon l'une des revendications précédentes, **caractérisé par le fait qu'**en plus de l'unité de détection de niveau d'eau (15), l'autre des au moins deux unités de détection comprend une unité de détection de la température de l'eau (12), l'unité de détection de la température de l'eau (12) comprenant un détecteur de température (121) et un coffret de protection (122), le coffret de protection (122) étant fixé au boîtier (11) et orienté vers une zone située à l'extérieur du boîtier (11), le détecteur de température (121) étant disposé à l'intérieur du coffret de protection (122).

7. Appareil de détection selon l'une des revendications précédentes, **caractérisé par le fait qu'**en plus de l'unité de détection de niveau d'eau (15), l'autre des au moins deux unités de détection comprend une unité de détection du déséquilibre de la charge (17), l'unité de détection du déséquilibre de la charge (17) détectant l'accélération et le mouvement d'un composant mobile chargé de l'appareil électrique, et envoyant à l'unité de traitement des signaux (16) une valeur obtenue d'un paramètre lié au mouvement.

8. Appareil de détection selon l'une des revendications précédentes, **caractérisé par le fait qu'**en plus de l'unité de détection de niveau d'eau (15), l'autre des au moins deux unités de détection comprend une unité de détection de la turbidité de l'eau (20), l'unité de détection de la turbidité de l'eau (20) comprenant un émetteur de lumière, un récepteur de lumière (202) et des capots de protection (203), où l'émetteur de lumière (201) et le récepteur de lumière (202) sont chacun situés dans un capot de protection (203), et l'émetteur de lumière (201), le récepteur de lumière (202) et les capots de protection (203) sont agencés de telle sorte que la lumière émise par l'émetteur de lumière (201) passe séquentiellement à travers le capot de protection (203) accueillant l'émetteur de lumière (201), l'eau, et le capot de protection accueillant le récepteur de lumière (202), et arrive ensuite au récepteur de lumière (202) .

9. Appareil de détection selon l'une des revendications précédentes, **caractérisé par le fait qu'**en plus de l'unité de détection de niveau d'eau (15), l'autre des au moins deux unités de détection comprend une unité de détection de la température de l'eau (12) et une unité de détection de la dureté de l'eau (13), l'unité de détection de la dureté de l'eau (13) comprenant au moins deux électrodes (131, 132), où les au moins deux électrodes (131, 132) sont fixées au boîtier (11), sont constituées d'un matériau conducteur d'électricité et sont orientées vers une zone située à l'extérieur du boîtier (11), et peuvent détecter la conductivité électrique de l'eau, et l'unité de détection de la température de l'eau (12) comprend un détecteur de température (121) disposé à l'intérieur de l'une des au moins deux électrodes (131, 132).

10. Appareil de détection selon l'une des revendications précédentes, **caractérisé par le fait que** l'unité de traitement des signaux (16) délivre en sortie des signaux numériques à un système de commande de l'appareil électrique de manière câblée ou sans fil au moyen d'un connecteur (19).

11. Appareil de détection selon l'une des revendications précédentes, **caractérisé par le fait que** l'unité de traitement des signaux (16) est capable, sur la base d'un signal provenant de l'une des au moins deux unités de détection, de compenser un signal d'une ou de plusieurs autres des au moins deux unités de détection.

12. Appareil électrique utilisé pour le lavage, notamment un lave-linge ou un lave-vaisselle, comprenant l'appareil de détection (1) selon l'une quelconque des revendications 1 - 11.

13. Appareil électrique selon la revendication 12, **caractérisé par le fait que** l'appareil de détection (1) est installé au fond, ou au fond d'un côté, d'un tambour extérieur (2) du lave-linge ou que l'appareil de détection (1) est installé au fond, ou au fond d'un côté, d'une chambre intérieure du lave-vaisselle.

14. Appareil électrique selon la revendication 12 ou 13, **caractérisé par le fait que** l'appareil de détection (1) est installé sur un appareil de raccordement, reliant le tambour extérieur (2) à un appareil d'évacuation de l'eau, du lave-linge, à une position proche du fond du tambour extérieur (2) du lave-linge ou que l'appareil de détection (1) est installé sur un appareil de raccordement, reliant la chambre intérieure à un appareil d'évacuation de l'eau, du lave-vaisselle.
